# EUROPEAN PATENT APPLICATION

(11) **EP 0 715 300 A2**
(43) Date of publication of application: **05.06.1996**
(21) Application number: 95420315.4
(22) Date of filing: 15.11.1995
(51) Int. Cl.: G11B 5/86

(54) **Very high field magnetic roller recorder**

(30) Priority: 30.11.1994 US 346722
(71) Applicant: EASTMAN KODAK COMPANY, Rochester, New York 14650-2201 (US)
(72) Inventor: Jeffers, Frederick John, c/o Eastman Kodak Co., Rochester, New York 14650-2201 (US)
(74) Representative: Buff, Michel

(57) **Abstract**

A magnetic roller recorder consists of a sequence of high energy bar magnets mounted contiguously on the cylindrical surface of a roller. Depending upon the data pattern to be recorded, the sequence may consist entirely of magnets, or may consist of magnets interspersed with non-magnetic "dummy" bars in the shape of the magnets to establish the overall configuration of the desired data pattern. The direction of magnetization of each cylindrically mounted magnet is radially directed, i.e. along each magnet's thickness direction, and that the direction of magnetization of adjacent magnets be oriented at 180 degrees with respect to each of its abutting neighbors. Resultantly, each magnet's magnetization direction is perpendicular to the plane of a slave layer contacting the roller.

## Description

### BACKGROUND OF THE INVENTION

### 1. Field of the Invention

This invention relates to magnetic recording, and in particular to recording repetitive information by means of a magnetized roller recorder.

### 2. Description Relative to the Prior Art

The use of a magnetic roller recorder for recording repetitive information is known in the prior art. U.S. Patent Number 5,353,169 entitled "Contact Duplication of Magnetically Recorded Information Without the Use of a Transfer Field" discloses a roller recorder having a deposited magnetic layer film of CoPt with a coercivity of 2000 Oe. A fixed data sequence is recorded on the roller's magnetic layer by means of a special record head, and the data sequence is then transferred to a 900 Oe slave layer by rolling the roller over the slave layer. Data transfers may be repetitively effected onto sequential segments of the slave medium by continuously rolling the roller along the slave. U.S. Patent No. 4,379,276, "Process and Apparatus for the Multipolar Magnetization of a Material in Strips", discloses magnetic structures for repetitive recording consisting of a sequence of individual SmCo₅ magnets separated by soft magnetic pole pieces. The direction of magnetization of the SmCo₅ magnets is disclosed as being parallel to the direction of motion of the slave layer being recorded.

### SUMMARY OF THE INVENTION

A magnetic roller recorder consists of a sequence of high energy bar magnets mounted contiguously on the cylindrical surface of a roller. Depending upon the data pattern to be recorded, the sequence may consist entirely of magnets, or may consist of magnets interspersed with one or more non-magnetic "dummy" bars in the shape of the magnets to establish the overall configuration of the desired data pattern. As mounted around the roller's circumference, a magnet's length is defined as its extension parallel to the axis of rotation of the roller, its width as its extension in the circumferential direction, and its thickness as its extension in the radial direction. The present invention teaches that the direction of magnetization of each cylindrically mounted magnet be radially directed, i.e. along each magnet's thickness direction, and that the direction of magnetization of adjacent magnets be oriented at 180 degrees with respect to each of its abutting neighbors. Resultantly, each magnet's magnetization direction is perpendicular to the plane of a slave layer contacting the roller, unlike the teachings of the prior art wherein the direction of magnetization of the elements of the master roller containing the pattern to be reproduced are parallel to the plane of the slave medium.

The bar magnets are very high energy magnets having an energy product of at least 5x10⁶ GOe, and are preferably made of NdFeB, SmCo₅ or BeFe. The high energy roller recorder of the invention allows direct recording on an associated slave medium having a coercivity of up to 10,000 Oe. For recording on slave media of lower coercivities, magnets fabricated of other materials, such as AlNiCo, may suffice.

### BRIEF DESCRIPTION OF THE DRAWINGS

The invention will be described with respect to the drawings of which:
Fig. 1 is a drawing of a magnetic roller recorder in accordance with the invention,
Fig. 2 is a drawing a magnet used in the roller recorder of the invention,
Fig. 3 is a drawing showing the field distribution of the magnet of Fig. 2,
Fig. 4 is a graph of field intensities provided by the magnetic roller recorder,
Fig. 5 is a graph of the field intensity experienced by points on media being recorded on by the magnetic roller recorder, and
Fig. 6 is a drawing illustrating another embodiment of the invention.

### DESCRIPTION OF THE PREFERRED EMBODIMENTS

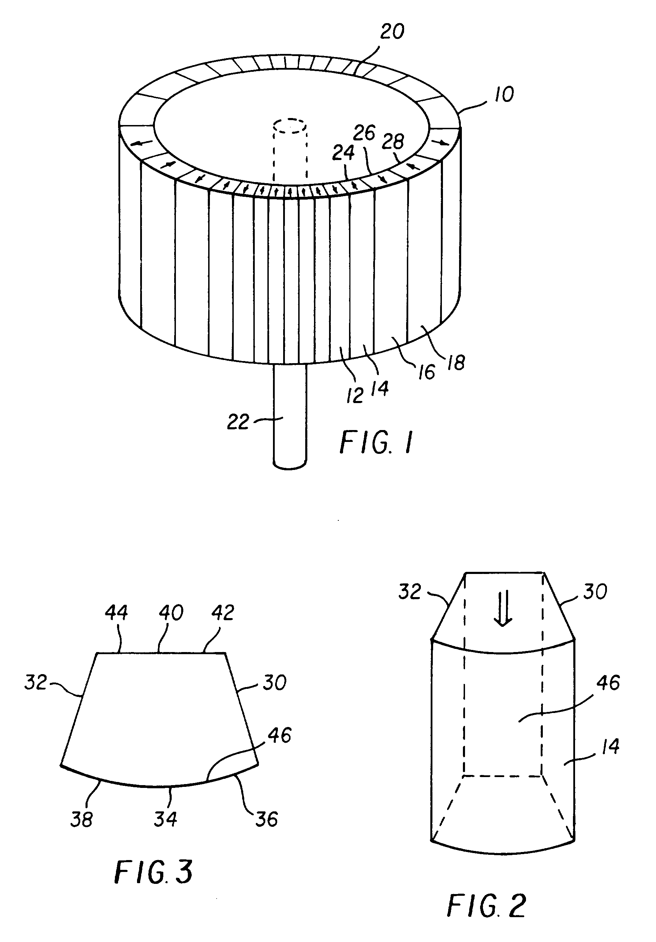

Referring to Fig. 1, a roller recorder 10 for recording a periodic repetitive pattern consists of a sequence of bar magnets e.g., 12, 14, 16, 18, mounted completely around the periphery 20 of the roller recorder 10 with their lengths parallel to the direction of the axis of rotation 22 of the roller recorder 10. Each magnet is magnetized to saturation in its thickness direction; that is, in the radial direction as mounted on the cylindrical periphery 20 of the roller recorder 10, and the magnetization of contiguous magnets, e.g. 24,26 ; 26,28 are oriented at 180 degrees with respect to each other in the radial direction. The periodic signal pattern recordable on an associated slave medium results from the alternating directions of the magnetization fields generated by successive contiguous magnets.

Referring to Fig. 3, it is seen for a typical magnet, i.e. 14, that the radially extending edges 30,32 are tapered so that when mounted on the periphery of the roller 20, magnet's edges, e.g. 30,32 are in full abutment with the edges of its contiguous neighboring magnets with no air gaps therebetween. This ensures maximum field for roller recording on an associated slave medium.

The magnetic field distribution of a typical magnet, e.g. 14 is seen in Fig. 3. For the magnetization 26, typical field lines 34,36,38,40,42,44 originate from the magnet 14. It will be noted that slave media are typically structured to support a magnetic field lying in the plane of the medium; that is, the magnetic material is generally anisotropic, with the preferred directions of magnetization in the plane of the medium. When such media are used with the magnetic roller of the invention, it is the magnetic field in the plane of the medium normal to the radius of the roller at the point of contact, i.e. the "x" component of the roller's total magnetic field as seen at the point of contact, which is responsible for the recording of the pattern on the slave. With this in mind, the noting that an associated slave medium contacts a typical magnet 14 on its face 46 , it will be appreciated that the field line 34 originating at the center of the magnet 14 has no component in the plane of the contacting medium, that is; at the center of the magnet the "x" component of the field is 0. On the other hand, at the edges 30, 32 the "x" component of the field is a maximum.

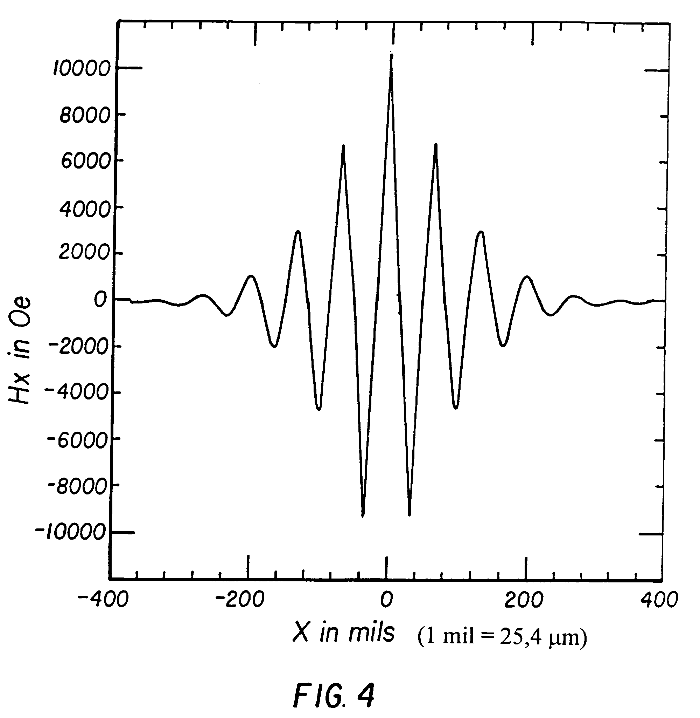

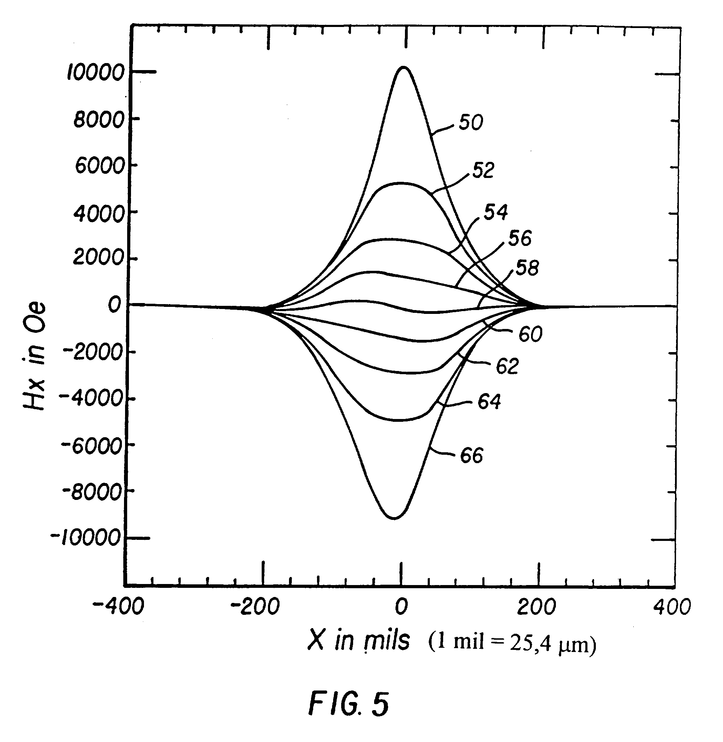

A graph of the "x" component of the field Hx in Oe, as a function of distance x, in a plane separated by 1 mil from, and parallel to the plane tangent to the roller at the junction of two magnets, is shown in Fig. 4. The origin of the graph is at the junction of two magnets. The diameter of the roller's circumferential periphery is about 51,61 mm (2.032"), and 204 magnets are glued around this periphery. Each magnet is 3,30 mm (0.130") in thickness, 0,889 mm (0.035") in width at one end tapering to a width of 0,787 mm (0.031") over the thickness dimension to the other end, and each is fabricated from NdFeB, having a remanent magnetization of 11,000 Gauss and an intrinsic coercivity of about 20,000 Oe. With the roller stationary, and traversing the direction "x". Fig. 4 shows the complicated filed strength variation between +10,000 Oe to - 10,000 Oe with distance from the origin. However, these variations do not reflect the conditions at fixed points on a slave medium when the roller is rolling along the slave; that is, when recording on the slave is actually taking place. Under these conditions, the field strengths existing at fixed points on the medium as the roller rolls by these points is illustrated in Fig. 5. These curves differ from those of Fig. 4 in the fact that while the roller is rolling, the magnets are separating from the medium faster than the corresponding increase in separation due solely to the radius of curvature of the roller. The effect of this, in general, is that no point on the slave sees an important reversal of the field as the roller rolls past the point. For example, referring to Fig. 5, the curve 50 is a plot of the field for a point on the slave medium which was originally at the origin, corresponding to the joint between two magnets. As the roller rotates along the medium, this point experiences the field indicated by the curve 50. The curves 52, 54, 56, 58 represent the fields experienced by points located on the slave at "x" distances of 0,lmm, 0,2mm, 0,3mm and 0,4mm (4,8, 12, and 16 mils) from the origin. It will be seen that only the point at x=0,4mm (x=16mils) from the origin (curve 58) experiences any field reversal, and even so the horizontal field at this point (i.e., the center of a magnet) is very low in amplitude. This non reversal of the field at any point except where the field amplitude is very low, accounts for the highly efficient direct transfer recording effected by the roller recorder of the invention. The curves 60 62,64, 66 shows corresponding non reversal of the field for points which become magnetized on the slave medium in the opposite direction.

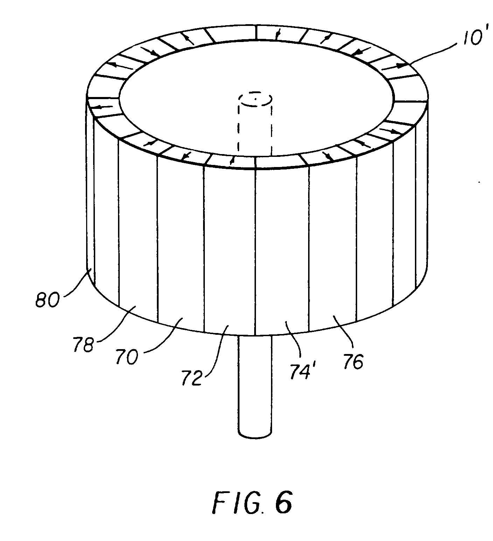

Fig. 6 illustrates a typical roller recorder 10' having a configuration for recording a selected binary data pattern. (In the drawings, different but related elements are identified with the same reference number, albeit that such corresponding elements are distinguished in the various drawings by primes.) Alternatingly phased magnets, e.g. 70,72,74 are used to record binary "1" signals on the slave, while appropriately positioned "dummy" non magnetic bars, e.g.,76,78,80 result in no magnetization of the slave medium, i.e. regions corresponding to binary "0"s.

The invention has been described in detail with particular reference to preferred embodiments thereof, but it will be understood that variations and modifications can be effected within the spirit and scope of the invention. For example, ornamental patterns or other types of images may be magnetically replicable by means of a magnetic roller having magnets arranged in the required pattern.

## Claims

1. A magnet roller recorder comprising:
a) a non magnetic cylindrical roller,
b) a plurality of bar magnets contiguously mounted on the periphery of said roller, said magnets being magnetized along the radial direction of said cylindrical roller, and
c) the magnetization of each of said contiguously mounted magnets being oriented at 180 degrees with respect to its adjacent abutting magnets.

2. The magnetic roller recorder of Claim 1 wherein each of said magnets has an energy product of at least 5x10⁶ GOe.

3. The magnetic roller recorder of Claim 2 wherein said magnets are one of either NdFeB, SmCo₅, or BaFe.

4. The magnetic roller recorder of Claim 1 wherein each of said magnets is tapered in said radial direction.

5. The magnetic roller recorder of Claim 1 configured for recording a periodic repetitive pattern.

6. A magnetic roller recorder for recording a binary pattern on an associated magnetic medium, said roller recorder comprising:
a) a non magnetic cylindrical roller,
b) at least one bar magnet mounted on the periphery of said roller, said magnets being magnetized along the radial direction of said cylindrical roller,
c) at least one non magnetic "dummy" bar mounted on said periphery adjacent of at least one of said bar magnets, wherein said bar magnets and said non magnetic "dummy" bars are cooperatively configured in said binary pattern, and
d) the magnetizations directions of abutting ones of said magnets being oriented at 180 degrees with respect to adjacent contiguous magnets.

7. The magnetic roller recorder of Claims 6 wherein each of said magnets has an energy product of at least 5x10⁶ GOe.

8. The magnetic roller recorder of Claim 7 wherein said magnets are one of either NdFeB, SmCo₅, or BaFe.

9. The magnetic roller recorder of Claim 6 wherein each of said magnets is tapered in said radial direction.

10. The magnetic roller recorded of Claim 6 wherein each of said "dummy" bars are tapered in said radial direction.
